# EUROPEAN PATENT APPLICATION

(11) **EP 4 209 571 A1**
(43) Date of publication of application: **12.07.2023**
(21) Application number: 21864155.3
(22) Date of filing: 23.08.2021
(51) Int. Cl.: C12G 3/06

(54) **CARBONATED ALCOHOL BEVERAGE HAVING CITRUS FLAVOR, AND METHOD FOR PRODUCING SAME**

(30) Priority: 01.09.2020 JP 2020146899
(71) Applicant: Asahi Group Holdings, Ltd., Tokyo 130-8602 (JP); Asahi Breweries, Ltd., Tokyo 130-8602 (JP)
(72) Inventor: MORI, Gyohei, Moriya-shi, Ibaraki 302-0106 (JP); ENDO, Minori, Moriya-shi, Ibaraki 302-0106 (JP)
(74) Representative: J A Kemp LLP
(86) International application number: PCT/JP2021/030729
(87) International publication number: WO 2022/050097

(57) **Abstract**

An object of the invention is to provide a citrus-flavored carbonated alcoholic beverage, which has thickness of citrus flavor, reduced alcohol-derived miscellaneous tastes or pungent smell, a bland flavor, a light aftertaste, and is easy to drink. The means for solution is a citrus-flavored carbonated alcoholic beverage comprising drinking water, carbon dioxide gas, 1 to 5% (v/v) alcohol, and a citrus-fruit-flavored flavoring, wherein the citrus-flavored carbonated alcoholic beverage comprises: 10% (w/w) or less extract component, and linalool and cis-3-hexenol in such amounts that their concentration ratio is 15 to 55.

## Description

### Technical Field

The present invention relates to a citrus-flavored carbonated alcoholic beverage, in particular to a citrus-flavored carbonated alcoholic beverage which has a bland flavor, a light aftertaste, and is easy to drink.

### Background Art

For citrus-flavored carbonated alcoholic beverages, products containing citrus fruit juice, for example, grapefruit, lemon, lime, orange and the like are commercially available. For example, "Chu-hai" (i.e., "Shochu" and soda) is originally a citrus-flavored carbonated alcoholic beverage made easier to drink by diluting Ko-group shochu with lemon and carbonated water. In addition, a number of fruit-flavored alcoholic beverages in which various citrus fruit juices are diluted with carbonated water and alcohol have been commercialized.

Patent document 1 discloses a low-alcohol beverage in which an alcohol feeling is suppressed by adjusting the concentration of a high intensity sweetener, citric acid acidity, and the like. Patent Document 2 discloses a starches-saccharides-zero carbonated alcoholic beverage not containing fruit juice or a fruit-derived component, and having excellent deliciousness and a refreshing feeling.

### [Prior Art Documents]

### [Patent Documents]

[Patent Document 1] JP 2011-36228 A
[Patent Document 2] JP 2015-136352 A

### [Summary of Invention]

### [Problem to be solved by Invention]

Conventional citrus-flavored carbonated alcoholic beverages have been counted on the characteristics of providing a feeling of fulfillment and satisfaction as article of taste. They have, therefore, a flavor that emphasizes a rich feeling and a body feeling.

On the other hand, in recent years, consumer preferences for beverages have also turned toward a drinking feeling with a lower rich feeling and body feeling. For example, carbonated water has become a latest trend. In other words, also as for citrus-flavored carbonated alcoholic beverages, there is a demand for a bland, light aftertaste, and easy-to-drink flavor like water, unlike the conventional direction.

If a light aftertaste and bland flavor is aimed, a method is considered in which the composition is made closer to that of water by, for example, reducing the degree of sweetness or by not using fruit juice. However, citrus-flavored carbonated alcoholic beverages are beverages made to be easier to drink by using citrus sweetness and sourness to alleviate miscellaneous tastes such as bitterness and astringency, and pungent smell of alcohol. Therefore, when fruit juice is not used, citrus flavor is weakened, thickness of flavor is reduced, and alcohol-derived miscellaneous tastes such as bitterness and astringency are emphasized, conversely resulting in a difficult-to-drink flavor.

The present invention solves the above problem, and an object thereof is to provide a citrus-flavored carbonated alcoholic beverage which has thickness of citrus flavor, reduced alcohol-derived miscellaneous tastes or pungent smell, a bland flavor and a light aftertaste, and is easy to drink.

### [Means of solving the problem]

The present invention provides a citrus-flavored carbonated alcoholic beverage comprising drinking water, carbon dioxide gas, 1 to 5% (v/v) of alcohol, and a citrus-fruit-flavored flavoring, wherein the citrus-flavored carbonated alcoholic beverage comprises:
10% (w/w) or less of extract component, and linalool and cis-3-hexenol in such amounts that their concentration ratio is 15 to 55.

In one embodiment, the citrus-flavored carbonated alcoholic beverage has a hardness of less than 50 mg/L.

In one embodiment, the citrus-flavored carbonated alcoholic beverage has a linalool concentration of 0.01 ppm to 10 ppm.

In one embodiment, the citrus is at least one selected from the group consisting of lemon and grapefruit.

In one embodiment, the citrus-flavored carbonated alcoholic beverage comprises at least one selected from the group consisting of sweeteners and sour agents.

In one embodiment, the citrus-flavored carbonated alcoholic beverage comprises no high intensity sweetener.

In one embodiment, the citrus-flavored carbonated alcoholic beverage has a hardness of 5 to 40 mg/L.

In one embodiment, the citrus-flavored carbonated alcoholic beverage comprises 0.3 to 3% (w/w) of extract component.

Also, the present invention provides a method for producing a citrus-flavored carbonated alcoholic beverage comprising drinking water, carbon dioxide gas, 1 to 5% (v/v) of alcohol, and a citrus-fruit-flavored flavoring, the method comprising:
a step of adjusting the extract concentration of the citrus-flavored carbonated alcoholic beverage to 10% (w/w) or less; and
a step of containing linalool and cis-3-hexenol in such amounts that their concentration ratio is 15 to 55.

Also, the present invention provides a method for achieving both thickness of flavor and a sharp aftertaste of a citrus-flavored carbonated alcoholic beverage comprising drinking water, carbon dioxide gas, 1 to 5% (v/v) of alcohol, and a citrus-fruit-flavored flavoring, the method comprising:
a step of adjusting the extract concentration of the citrus-flavored carbonated alcoholic beverage to 10% (w/w) or less; and
a step of containing linalool and cis-3-hexenol in such amounts that their concentration ratio is 15 to 55.

In one embodiment, the method further comprises a step of adjusting the hardness of the citrus-flavored carbonated alcoholic beverage to less than 50 mg/L.

In one embodiment, any one of the methods further comprises a step of adjusting the hardness of the citrus-flavored carbonated alcoholic beverage to 5 to 40 mg/L.

In one embodiment of any one of the methods, the linalool is contained in a concentration amount of 0.01 ppm to 10 ppm.

In one embodiment of any one of the methods, the extract concentration is adjusted to 0.3 to 3% (w/w).

### [Effect of the invention]

The citrus-flavored carbonated alcoholic beverage of the present invention has thickness of citrus flavor, reduced alcohol-derived miscellaneous tastes or pungent smell, a bland flavor and a light aftertaste, and is easy to drink.

### [Embodiment of the invention]

The citrus-flavored carbonated alcoholic beverage of the present invention (hereinafter sometimes simply referred to as "alcoholic beverage") contains alcohol, i.e., ethanol, in an amount of 1 to 5% (v/v). By making the amount of the alcohol 5% (v/v) or less, it becomes easier to reduce miscellaneous tastes or pungent smell derived from alcohol in citrus-flavored carbonated alcoholic beverages. When the alcohol concentration is less than 1% (v/v), the flavor balance as the alcoholic beverage tends to be poor. When it exceeds 5% (v/v), alcohol-derived miscellaneous tastes such as bitterness and astringency, and pungent smell remain after drinking, resulting in a flavor poor in aftertaste. The alcohol concentration of alcoholic beverages is preferably 1.5 to 5% (v/v), and more preferably 2 to 5% (v/v).

The alcohol used in the alcoholic beverage of the present invention is preferably one other than fruit component-containing raw material liquor. The use of fruit component-containing raw material liquor may reduce the storage stability of alcoholic beverages since a plant tissue component is introduced.

Specific examples of the alcohol include raw material alcohol, spirits (vodka, gin, rum, and the like), liqueurs, whiskey, shochu (A, B, or A and B mixture) and the like, and brewed liquors such as sake, wine, and beer. These may be alone or in combination of more than one.

The alcoholic beverage of the present invention may contain fruit juice. In that case, the fruit juice percentage is less than 4% (w/w). Citrus fruit juice has good strength and balance between sweetness and sourness, and provides juiciness or a fruit juice feeling, which reduces miscellaneous tastes and pungent smell of alcohol. When the fruit juice percentage is 4% (w/w) or more, alcoholic beverages leave lingering sweetness, and may cause a sticky flavor. In addition, citrus juice deteriorates due to oxygen, heat and the like, and when used in large quantities, bitterness and astringency stand out. The alcoholic beverage preferably has a fruit juice percentage of less than 3.5% (w/w), more preferably less than 1% (w/w), and still more preferably contains no fruit juice.

Citrus fruit juice is a juice squeezed from fruit belonging to citrus fruits. Examples of citrus fruits include lemon, grapefruit, orange, lime, iyokan (citrus iyo), unshu mikan (citrus unshu), kabosu (citrus kabosu), kishu mikan (citrus kinokuni), chinotto (citrus myrtifolia), kouji (citrus leiocarpa), sanbo-kan (citrus sulcata), citron (citrus medica), jabara (citrus jabara), sudachi (citrus sudachi), daidai (citrus daidai), tachibana (citrus tachibana), tangor, natsumikan (citrus natsudaidai), hassaku (citrus hassaku), hanayuzu (citrus hanayu), hyuganatsu (citrus tamurana), hirami lemon (citrus depressa) (shikuwasa), pomelo (citrus maxima), ponkan (citrus reticulata) (mandarin orange), yuzu (citrus junos) and the like. Among citrus fruits, lemon and grapefruit are preferred because they have high affinity for alcohol, and have sourness and bitterness.

For citrus fruit juice, for example, various fruit juices such as concentrated fruit juice, reconstituted fruit juice, and straight fruit juice, fruit purees, and diluted liquids, concentrated liquids, mixed liquids of these may be used. The citrus fruit juice may be made from one type of fruit or more than one type of fruit.

The alcoholic beverage of the present invention contains linalool. Linalool is a compound belonging to monoterpene alcohols represented by the chemical formula C₁₀H₁₈O. This linalool may act synergistically with octanal described below to suppress miscellaneous tastes derived from alcohol, which become stronger when the citrus flavor of alcoholic beverages becomes thin and bland.

The linalool content may be 0.01 to 10 ppm. If the linalool content is less than 0.01 ppm, the fruit feeling is likely to decrease. If it exceeds 10 ppm, only the aroma becomes strong relative to the taste, so that the balance between them is easily lost. In addition, it is easily separated from aromas reminiscent of fruit. The linalool content is preferably 0.01 to 8 ppm, and more preferably 0.01 to 5 ppm. The linalool content may be measured by known methods such as a SPME-GC-MS method.

In one embodiment, the linalool content of the alcoholic beverage is 0.005 to 3 ppm, preferably 0.01 to 2 ppm, and still more preferably 0.03 to 1 ppm. If the linalool content is less than 0.005 ppm, the fruit feeling is reduced.

The alcoholic beverage of the present invention contains cis-3-hexenol. cis-3-Hexenol is a chain-like organic compound represented by the chemical formula C₆H₁₀O. This cis-3-hexenol may act synergistically with linalool to suppress miscellaneous tastes derived from alcohol, which become stronger when the citrus flavor of alcoholic beverages becomes thin and bland.

Linalool and cis-3-hexenol may be present in predetermined amounts in the alcoholic beverage produced. Linalool and cis-3-hexenol may be contained in alcoholic beverages as components of raw materials such as citrus-fruit-flavored flavorings, or those which are commercially available as the compounds may be used respectively.

The cis-3-hexenol content is in an amount such that the ratio of the linalool concentration to the cis-3-hexenol concentration, that is, the (linalool concentration/cis-3-hexenol concentration) is 15 to 55. If this ratio is less than 15, the suppression of alcohol odor is insufficient, and if it exceeds 55, miscellaneous tastes may be produced. The ratio of the linalool concentration to the cis-3-hexenol concentration is preferably 20 to 50, and more preferably 25 to 45. The cis-3-hexenol content may be measured by known methods such as a SPME-GC-MS method.

The alcoholic beverage of the present invention contains carbon dioxide gas. Carbon dioxide gas is preferably used in an amount such that the gas volume is in the range of 1.0 to 4.5. If the gas volume of carbon dioxide gas is less than 1.0, it lacks a carbonated beverage-like refreshing feeling, and if it exceeds 4.5, carbonation stimulus and bitterness become too strong, reducing the deliciousness of the beverage. The preferred carbon dioxide content is 1.5 to 3.5 gas volumes.

The alcoholic beverage of the present invention preferably has a hardness of less than 50 mg/L. The hardness means a value obtained by converting the concentrations of calcium salt and magnesium salt in the alcoholic beverage (i.e., total hardness) to calcium carbonate, and the value being expressed in mg/L as a unit. When the alcoholic beverage has a hardness, complexity of taste is easily obtained in the middle.

When the hardness of alcoholic beverages exceeds 50 mg/L, a miscellaneous taste is produced in the aftertaste. The hardness of the alcoholic beverage is preferably 5 to 40 mg/L, and more preferably 10 to 30 mg/L. If the hardness of the alcoholic beverage is less than 5 mg/L, complexity of taste that contributes to thickness of flavor may be insufficient.

The alcoholic beverage of the present invention preferably contains a sweet substance. Sweet substances are substances capable of imparting sweetness to a beverage. For example, saccharides and sugar alcohols fall under sweet substances.

Specific examples of saccharides include fructose-glucose liquid sugar, sugar, maltose, and lactose.

Specific examples of sugar alcohols include reduced maltose starch syrup, erythritol, xylitol, and maltitol.

As the sweet substance, one type of sweet substance may be used, or more than one type of substance may be used. Preferably, the sweet substance is fructose-glucose liquid sugar (i.e., high-fructose corn syrup) or the like.

The alcoholic beverage of the present invention preferably does not contain a high intensity sweetener. The use of the high intensity sweetener may impart a miscellaneous taste. The high intensity sweetener here refers to "Designated Food Additives" designated by the Minister of Health, Labor and Welfare, and substances classified as "sweeteners" in "Existing Food Additives". The "Existing Food Additives" include substances determined as natural additives that have been used for many years. Substances included in the "designated additives" and the "existing additives" are listed on the website of the Japan Food Additives Association.

Examples of high intensity sweeteners include aspartame, acesulfame potassium, xylitol, disodium glycyrrhizinate, saccharin, calcium saccharin, sodium saccharin, sucralose, neotame, arabinose, licorice extract, xylose, stevia, thaumatin, momorudica grosvenori extract, rhamnose and ribose.

The alcoholic beverage of the present invention preferably contains a sour substance. Sour substances are substances capable of imparting sourness to beverages. Generally, sour substances are sour agents, and acids or salts thereof that are harmless to a human body. Sour agents herein refer to substances classified as "sour agents" in the above "designated additives" and "existing additives".

Specific examples of sour agents include adipic acid, citric acid, trisodium citrate, glucono-delta-lactone, gluconic acid, potassium gluconate, sodium gluconate, succinic acid, monosodium succinate, disodium succinate, sodium acetate, DL-tartaric acid, L-tartaric acid, DL-sodium tartrate, L-sodium tartrate, carbon dioxide, lactic acid, sodium lactate, glacial acetic acid, fumaric acid, monosodium fumarate, DL-malic acid, DL-sodium maleate, and phosphoric acid. These may be used in the form of salts, such as potassium and sodium salts, or in the form of buffer solutions.

As the sour substance, one type of substance may be used or more than one type of substance may be used. Preferably, the sour substance is citric acid or the like.

The alcoholic beverage of the present invention contains a citrus-fruit-flavored flavoring. Citrus-fruit-flavored flavorings are flavorings that reproduce the aroma of edible citrus fruit. The citrus-fruit-flavored flavoring is contained to enhance the refreshing feeling of alcoholic beverages and make them easier to drink. For example, concentrated fruit juice may lose its fragrance during the production process. The flavoring is useful for supplementing the reduced fragrance of the concentrated fruit juice. As the citrus-fruit-flavored flavoring, one type of flavor may be used, or more than one type of flavor may be used.

In the alcoholic beverage of the present invention, raw materials and food additives usually used in the field of carbonated alcoholic beverages, such as pigments, flavorings, vitamins, amino acids, water-soluble dietary fiber, stabilizers, and emulsifiers, as necessary. Specific examples of pigments include caramel and the like.

The alcoholic beverage of the present invention contains 10% (w/w) or less of extract component. The extract component means the concentration of a non-volatile solid component contained in the alcoholic beverage, and mostly carbohydrates and proteins are main components. Reducing the content of the extract component lightens the aftertaste of the alcoholic beverage. The extract concentration of the alcoholic beverage is preferably 6% (w/w) or less, and more preferably 4% (w/w) or less.

In one preferred embodiment, the extract concentration of the alcoholic beverage is 0.3 to 5% (w/w) or less, more preferably 0.5 to 3% (w/w) or less, and still more preferably 0.6 to 2% (w/w). When the extract concentration of the alcoholic beverage is less than 0.3% (w/w), miscellaneous tastes or pungent smell derived from alcohol is hardly reduced.

The method for producing an alcoholic beverage of the present invention includes the steps normally conducted in the production of alcoholic beverages, as described below as an example. Drinking water, alcohol, citrus fruit juice, linalool, cis-3-hexenol, and other components such as sweet substances, sour substances, citrus-fruit-flavored flavorings, and food additives are uniformly mixed in predetermined amounts. The resulting mixed liquid is then cooled. Carbonation is conducted as necessary. Thereafter, the intended alcoholic beverages can be produced by-filling it into containers, followed by sealing. After carbonation, it may be filtered using a membrane filter. Further, after preparing an intermediate liquid in which the contained components are concentrated, it may be diluted with water or carbonated water to prepare alcoholic beverages.

The present invention will be further specifically described by the following examples, but the present invention is not limited to these examples.

### [Examples]

### <Example 1>

### Lemon-flavored alcoholic beverage

**[Table 1]**

| Raw material | Blending amount |
|---|---|
| Brewing alcohol (alcohol concentration 95% (v/v)) | 43.2 mL |
| 55% Fructose-glucose liquid sugar | 10.0 g |
| Lemon flavoring | 1.0 g |
| Citric acid (anhydrous) | 1.5 g |
| Sodium citrate | 0.4 g |
| Pure water | Until reaching 1,000mL |
| Total | 1,000 mL |

Base liquid 1 with the composition shown in Table 1 was prepared. Base liquid 1 had an alcohol concentration of 4.0% (v/v), and a degree of sweetness of 1.0. In Table 1, as a lemon flavoring, a solution in which 6.25 µm of citral (purity of 96% or more) and 30 mL of ethanol were mixed was used. Carbon dioxide gas was dissolved in base liquid 1 to prepare a lemon-flavored alcoholic beverage having a carbon dioxide gas volume of 3.3. This served as beverage sample 1-1.

"Deep Ocean Water Mineral Hardness 3000" (manufactured by San-Ei Gen F.F.I., Inc., hardness 3,000 mg/L) was added to pure water to adjust the hardness of beverage samples as described in Table 2. Except that the water obtained was added, a base liquid was prepared according to the composition shown in Table 1. To the base liquid, linalool in an amount of 0.07 ppm, and cis-3-hexenol in an amount such that the (linalool concentration/cis-3-hexenol concentration) was a value shown in in Table 2 were added, and carbon dioxide gas was dissolved in the same manner as above to prepare beverage samples 1-2 through 1-8.

The extract concentration (% (w/w)) and citric acid acidity (g/100 mL) of the obtained beverage samples 1-1 to 1-8 were determined. These were also subjected to sensory tests. Sensory tests of the beverage samples were conducted as follows.

Five panelists in charge of developing fruit-flavored alcoholic beverages tasted each beverage sample and evaluated the samples on a 5-levels scale using, as evaluation items, "complexity of taste in the middle" indicating the thickness of citrus flavor, "sharpness in the last" indicating the absence of ethanol-derived miscellaneous tastes derived from alcohol, such as bitterness and astringency, or pungent smell, and "drinkability" indicating a bland flavor and a light aftertaste. The samples that are eligible to the evaluation items were scored as 5, and the samples that are not eligible to the evaluation items were scored as 1. The average of the five persons' scores was used as the evaluation score. A score of 4 or more is judged as good. The results are shown in Table 2.

**[Table 2]**

| Beverage sample No. | | 1-1 | 1-2 | 1-3 | 1-4 | 1-5 | 1.6 | 1-7 | 1-8 |
|---|---|---|---|---|---|---|---|---|---|
| Composition of beverage sample | Linalool concentration (ppm) | 0 | 0.07 | 0.07 | 0.07 | 0.07 | 0.07 | 0.07 | 0.07 |
| | Linalool concentration/cis-3-hexenol concentration | 0 | 10 | 20 | 30 | 40 | 50 | 60 | 100 |
| | Hardness (mg/L) | 0 | 0 | 0 | 0 | 0 | 0 | 0 | 0 |
| | Extract concentration (%(w/w)) | 0.9 | 0.9 | 0.9 | 0.9 | 0.9 | 0.9 | 0.9 | 0.9 |
| | Citric acid acidity (g1100mL) | 0.15 | 0.15 | 0.15 | 0.15 | 0.15 | 0.15 | 0.15 | 0.15 |
| Results of sensory evaluation | Complexity of taste in the middle | 3 | 3 | 3 | 3 | 2 | 2 | 2 | 2 |
| | Sharpness in the last | 2 | 3 | 4 | 5 | 5 | 4 | 3 | 2 |
| | Drinkability | 2 | 3 | 4 | 4 | 4 | 3 | 2 | 1 |
| | Comments | Slight ethanol feeling, watery | Slight ethanol feeling | Cohesive, bland, citrus feeling, well-balanced | Slightly juicy, tight aftertaste, refreshing feeling, well-balanced, flowery | Slightly juicy, tight aftertaste, sharpness | Slightly complex aftertaste | Slight astringency | Astringency, flowery |

### <Example 2>

### Lemon-flavored alcoholic beverage

Base liquid 1 having the composition shown in Table 1 was blended with linalool in an amount of 0.07 ppm, and cis-3-hexenol in an amount such that the (linalool concentration/cis-3-hexenol concentration) was 30, and carbon dioxide was dissolved in the same manner as in Example 1 to prepare beverage sample 2-1.

"Deep Ocean Water Mineral Hardness 3000" (manufactured by San-Ei Gen F.F.I., Inc., hardness 3,000 mg/L) was added to pure water to adjust the hardness of beverage samples to values described in Table 3. Except that the water obtained was added, a base liquid was prepared according to the composition shown in Table 1, and carbon dioxide gas was dissolved in the same manner as in Example 1 to prepare beverage samples 2-2 through 2-7.

The obtained beverage samples were subjected to sensory tests in the same manner as in Example 1. The results are shown in Table 3.

**[Table 3]**

| Beverage sample No. | | 2-1 | 2-2 | 2-3 | 2-4 | 2-5 | 2-6 | 2-7 |
|---|---|---|---|---|---|---|---|---|
| Composition of beverage sample | Linalool concentration (ppm) | 0.07 | 0.07 | 0.07 | 0.07 | 0.07 | 0.07 | 0.07 |
| | Linalool concentration/cis-3-hexenol concentration | 30 | 30 | 30 | 30 | 30 | 30 | 30 |
| | Hardness (mg/L) | 0 | 5 | 10 | 13 | 24 | 30 | 50 |
| | Extract concentration (%(w/w)) | 0.9 | 0.9 | 0.9 | 0.9 | 0.9 | 0.9 | 0.9 |
| | Citric acid acidity (g/100 mL) | 0.15 | 0.15 | 0.15 | 0.15 | 0.15 | 0.15 | 0.15 |
| Results of sensory evaluation | Complexity of taste in the middle | 3 | 3 | 4 | 5 | 5 | 5 | 5 |
| | Sharpness in the last | 5 | 5 | 4 | 4 | 4 | 4 | 3 |
| | Drinkability | 3 | 4 | 4 | 5 | 5 | 4 | 3 |
| | Comments | Green in the middle, sourness, easy to drink, but the taste is light | Brownish afterglow, easy to drink, but the taste is light | Sharpness, drinkable | Best balance between complex taste and sharpness, good sharp aftertaste, sharpness and complex taste, drinkable | Sourness stands out, Juicy and mild, drinkable | Voluminous in the middle, juicy and complexity of taste, heavy in the last | Herbal after-glow, mild and juicy, heavy in the last |

In the lemon-flavored alcoholic beverage having a low extract concentration and alcohol concentration, containing a lemon flavoring, and having no hardness, an alcohol odor was perceived (beverage sample 1-1). By adding linalool and cis-3-hexenol in well balance, the alcohol odor and miscellaneous tastes were disappeared, and a sharp aftertaste was imparted to the flavor (beverage samples 2-1 to 2-6). By increasing the hardness of water, the thickness was imparted to the flavor. When linalool and cis-3-hexenol were ill-balanced, and the water hardness was increased too much, astringency and miscellaneous tastes became perceived (beverage samples 1-8 and 2-7).

### <Example 3>

### Grapefruit-flavored alcoholic beverage

**[Table 4]**

| Raw material | Blending amount |
|---|---|
| Brewing alcohol (alcohol concentration 95% (v/v)) | 43.2mL |
| 55% Fructose-glucose liquid sugar | 10.0 g |
| Grapefruit flavoring | 1.0 g |
| Citric acid (anhydrous) | 1.5 g |
| Sodium citrate | 0.4 g |
| Pure water | Until reaching 1,000 mL |
| Total | 1,000 mL |

Base liquid 2 with the composition shown in Table 4 was prepared. Base liquid 2 had an alcohol concentration of 4.0% (v/v), and a degree of sweetness of 1.0. In Table 4, as a grapefruit flavoring, a solution in which 300 µL of D-limonene (Food Grade) and 30 mL of ethanol were mixed was used. Carbon dioxide gas was dissolved in base liquid 2 to prepare a grapefruit-flavored alcoholic beverage having a carbon dioxide gas volume of 3.3. This served as beverage sample 3-1.

"Deep Ocean Water Mineral Hardness 3000" (manufactured by San-Ei Gen F.F.I., Inc., hardness 3,000 mg/L) was added to pure water to adjust the hardness of beverage samples to 13 mg/L. Except that the water obtained was added, a base liquid was prepared according to the composition shown in Table 1. To the base liquid, linalool in an amount of 2.38 ppm, and cis-3-hexenol in an amount of 0.08 ppm were added, and carbon dioxide gas was dissolved in the same manner as above to prepare beverage sample 3-2.

The extract concentration (% (w/w)) and citric acid acidity (g/100 mL) of the obtained beverage samples 3-1 and 3-2 were determined, and subjected to sensory tests. The results are shown in Table 5.

**[Table 5]**

| Beverage sample No. | | 3-1 | 3-2 |
|---|---|---|---|
| Composition of beverage sample | Linalool concentration (ppm) | 0 | 2.38 |
| | Linalool concentration/cis-3-hexenol concentration | 0 | 30 |
| | Hardness (mg/L) | 0 | 13 |
| | Extract concentration (%(w/w)) | 0.9 | 0.9 |
| | Citric acid acidity (g/100mL) | 0.15 | 0.15 |
| Results of sensory evaluation | Complexity of taste in the middle | 3 | 5 |
| | Sharpness in the last | 2 | 4 |
| | Drinkability | 2 | 5 |
| | Comments | Watery, sweetness and sourness remain on the tongue, not cohesive, floral | Juicy, light aftertaste, good sharpness and drinkable, peel green |

From the results in Table 5, the effect of achieving both thickness of flavor and a sharp aftertaste was shown also in grapefruit-flavored alcoholic beverages having low extract concentrations and alcohol concentrations.

## Claims

1. A citrus-flavored carbonated alcoholic beverage comprising drinking water, carbon dioxide gas, 1 to 5% (v/v) of alcohol, and a citrus-fruit-flavored flavoring, wherein the citrus-flavored carbonated alcoholic beverage comprises:
10% (w/w) or less of extract component, and linalool and cis-3-hexenol in such amounts that their concentration ratio is 15 to 55.

2. The citrus-flavored carbonated alcoholic beverage according to claim 1, having a hardness of less than 50 mg/L.

3. The citrus-flavored carbonated alcoholic beverage according to claim 1 or 2, wherein the concentration of the linalool is 0.01 ppm to 10 ppm.

4. The citrus-flavored carbonated alcoholic beverage according to any one of claims 1 to 3, wherein the citrus is at least one selected from the group consisting of lemon and grapefruit.

5. The citrus-flavored carbonated alcoholic beverage according to any one of claims 1 to 4, comprising at least one selected from the group consisting of sweeteners and sour agents.

6. The citrus-flavored carbonated alcoholic beverage according to any one of claims 1 to 5, comprising no high intensity sweetener.

7. The citrus-flavored carbonated alcoholic beverage according to any one of claims 1 to 6, having a hardness of 5 to 40 mg/L.

8. The citrus-flavored carbonated alcoholic beverage according to any one of claims 1 to 7, comprising 0.3 to 3% (w/w) of extract component.

9. A method for producing a citrus-flavored carbonated alcoholic beverage comprising drinking water, carbon dioxide gas, 1 to 5% (v/v) of alcohol, and a citrus-fruit-flavored flavoring, the method comprising:
a step of adjusting the extract concentration of the citrus-flavored carbonated alcoholic beverage to 10% (w/w) or less; and
a step of containing linalool and cis-3-hexenol in such amounts that their concentration ratio is 15 to 55.

10. A method for achieving both thickness of flavor and a sharp aftertaste of a citrus-flavored carbonated alcoholic beverage comprising drinking water, carbon dioxide gas, 1 to 5% (v/v) of alcohol, and a citrus-fruit-flavored flavoring, the method comprising:
a step of adjusting the extract concentration of the citrus-flavored carbonated alcoholic beverage to 10% (w/w) or less; and
a step of containing linalool and cis-3-hexenol in such amounts that their concentration ratio is 15 to 55.

11. The method according to claim 9 or 10, further comprising a step of adjusting the hardness of the citrus-flavored carbonated alcoholic beverage to less than 50 mg/L.

12. The method according to claim 9 or 10, further comprising a step of adjusting the hardness of the citrus-flavored carbonated alcoholic beverage to 5 to 40 mg/L.

13. The method according to any one of claims 9 to 12, wherein the linalool is contained in a concentration amount of 0.01 ppm to 10 ppm.

14. The method according to any one of claims 9 to 13, wherein the extract concentration is adjusted to 0.3 to 3% (w/w).
